# FASCICULE DE BREVET EUROPEEN

(11) **EP 4 417 521 B1**
(45) Date de publication et mention de la délivrance du brevet: **26.11.2025**
(21) Numéro de dépôt: 24157230.4
(22) Date de dépôt: 13.02.2024
(51) Int. Cl.: B64D 45/00, B64D 37/32, F01D 21/04, F02C 7/22, B64D 27/40, B64D 37/30, F02C 3/22

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 14.02.2023 FR 2301354
(43) Date de publication de la demande: 21.08.2024
(73) Titulaire: AIRBUS OPERATIONS, 31060 Toulouse Cedex 9 (FR)
(72) Inventeur: CZAPLA, Lionel, 31060 Toulouse (FR); VARDELLE, Emmanuel, 31060 Toulouse (FR)
(74) Mandataire: Cabinet Le Guen Maillet

(56) Documents cités:
- DE-A1- 2 413 507
- GB-A- 1 453 873
- US-A- 4 818 176
- US-A1- 2008 073 460
- US-A1- 2019 270 524

## Description

### DOMAINE TECHNIQUE

La présente invention concerne un ensemble propulsif pour un aéronef, ledit ensemble propulsif comprenant une nacelle, un châssis logé dans la nacelle, un système de motorisation tel qu'un turbopropulseur logé dans le châssis, une canalisation de dihydrogène connectée à un réservoir de dihydrogène, un réseau de distribution de dihydrogène qui est connecté à la canalisation de dihydrogène et qui alimente la chambre de combustion du système de motorisation avec ledit dihydrogène au niveau d'injecteurs où le réseau de distribution comporte au moins une canalisation qui serpente à l'extérieur de la nacelle. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de motorisation tel qu'un turbopropulseur. Un tel système de motorisation comporte un noyau qui est enfermé dans un carter et qui comporte entre autres de l'amont vers l'aval, un compresseur, une chambre de combustion et une turbine. Le système de motorisation comporte également une hélice entraînée en rotation par le noyau. Le compresseur et la turbine possèdent chacun des aubes qui sont fixées à un arbre rotatif. L'ensemble propulsif comporte également un châssis qui est fixé à une structure de l'aile de l'aéronef et constitue ainsi un mât d'accrochage sous l'aile. Le document US2019270524 A1 divulgue un ensemble propulsif pour un aéronef de l'état de la technique.

Pour limiter la pollution due à l'utilisation de kérosène, il est envisagé d'utiliser le dihydrogène comme carburant dans la chambre de combustion.

Ce dihydrogène est amené depuis un réservoir jusqu'à la chambre de combustion par une canalisation de dihydrogène qui s'étend au moins en partie dans l'ensemble propulsif. Du fait de la structure de l'ensemble propulsif et de sa position sous l'aile et sur l'avant de l'aile, la canalisation de dihydrogène traverse le châssis en provenant de l'aile et court ainsi de l'arrière vers l'avant jusqu' à la chambre de combustion.

Pour simplifier la mise en œuvre d'une telle installation, la canalisation de dihydrogène court à l'extérieur du carter pour rejoindre la chambre de combustion à travers le carter.

En cas d'incident sur le système de motorisation, il peut arriver que certaines aubes de la turbine ou du compresseur se détachent de l'arbre et, du fait de leur vitesse, elles traversent le carter au risque de couper la canalisation de dihydrogène.

### EXPOSÉ DE L'INVENTION

Un objet de la présente invention est de proposer un ensemble propulsif qui comporte une canalisation de dérivation disposée autour de la turbine qui serpente autour de la nacelle où l'ensemble propulsif présente des moyens de protection et d'absorption mécanique prévus entre la turbine et la canalisation de dérivation pour absorber les chocs lorsqu'une aube se détache. Ainsi, en cas de casse de tout ou partie d'une aube de la turbine, la canalisation de dérivation est protégée.

À cet effet, est proposé un ensemble propulsif pour un aéronef comportant :
- un châssis prenant la forme d'une cage constituée d'un treillis de barres,
- une nacelle fixée au châssis et constituée de capots,
- un système de motorisation logé dans la nacelle et comportant un noyau enfermé dans un carter et présentant une chambre de combustion, et une turbine munie d'aubes rotatives autour d'un axe longitudinal, la partie du carter contenant la turbine étant logée dans la cage,
- une canalisation d'alimentation destinée à acheminer du dihydrogène, serpentant à l'intérieur de la nacelle jusqu'à l'arrière de la turbine, et présentant un décrochement radial qui traverse un des capots pour rejoindre l'extérieur de la nacelle,
- une rampe d'injecteurs logée dans la nacelle, équipée d'injecteurs qui plongent dans la chambre de combustion à l'avant de la turbine, et présentant un décrochement radial qui traverse un des capots pour rejoindre l'extérieur de la nacelle,
- une canalisation de dérivation fluidiquement connectée entre les deux décrochements radiaux et disposée à l'extérieur de la nacelle, et
- des moyens de protection comportant :
- une plaque de protection disposée à l'intérieur de la cage par rapport aux barres et s'étendant entre la turbine et la canalisation de dérivation,
- au moins un moyen de fixation prévu pour fixer la plaque de protection à une barre, et,
- pour chaque moyen de fixation, un moyen d'absorption disposé entre la plaque de protection et la barre associée.

Avec un tel arrangement, une aube de la turbine qui se détacherait partiellement ou entièrement, ne sectionnera pas la canalisation de dérivation car elle sera arrêtée dans sa course par les moyens de protection et d'absorption.

Selon un mode de réalisation particulier, il y a un moyen d'absorption unique qui prend la forme d'une plaque entre la plaque de protection et les barres.

Selon un mode de réalisation particulier, il y a un moyen d'absorption distinct par moyen de fixation et chaque moyen d'absorption est pris en sandwich entre la plaque de protection et la barre correspondant au moyen de fixation.

Avantageusement, le ou chaque moyen d'absorption présente une résistance à la compression moins élevée du côté de la plaque de protection et une résistance à la compression plus élevée du côté de la barre.

Avantageusement, le capot de la nacelle disposé le long de la canalisation de dérivation est remplacé par un moyen d'absorption complémentaire qui est fixé au châssis ou aux capots voisins.

Avantageusement, le moyen d'absorption complémentaire présente une résistance à la compression moins élevée du côté de l'intérieur de la nacelle et une résistance à la compression plus élevée du côté de l'extérieur de la nacelle.

Avantageusement, l'ensemble propulsif comporte un capot extérieur fixé sur l'extérieur des capots de la nacelle en englobant la canalisation de dérivation, et l'ensemble propulsif présente une entrée d'air à l'avant du capot extérieur, entre ce dernier et les capots de la nacelle, et une sortie à l'arrière du capot extérieur, entre ce dernier et les capots de la nacelle. L'invention propose également un aéronef comportant une aile, un réservoir de dihydrogène et au moins un ensemble propulsif selon l'une des variantes précédentes, où l'ensemble propulsif est fixé sous l'aile et où la canalisation d'alimentation est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique en vue de dessus de l'ensemble propulsif selon l'invention,
Fig. 3 est une vue en coupe selon la ligne III-III de la Fig. 2 pour un premier mode de réalisation de l'invention,
Fig. 4 est une vue en coupe selon la ligne III-III de la Fig. 2 pour un deuxième mode de réalisation de l'invention, et
Fig. 5 est une variante de réalisation de moyens de fixation mis en œuvre dans l'invention.

### EXPOSÉ DÉTAILLÉ DE MODES DE RÉALISATION

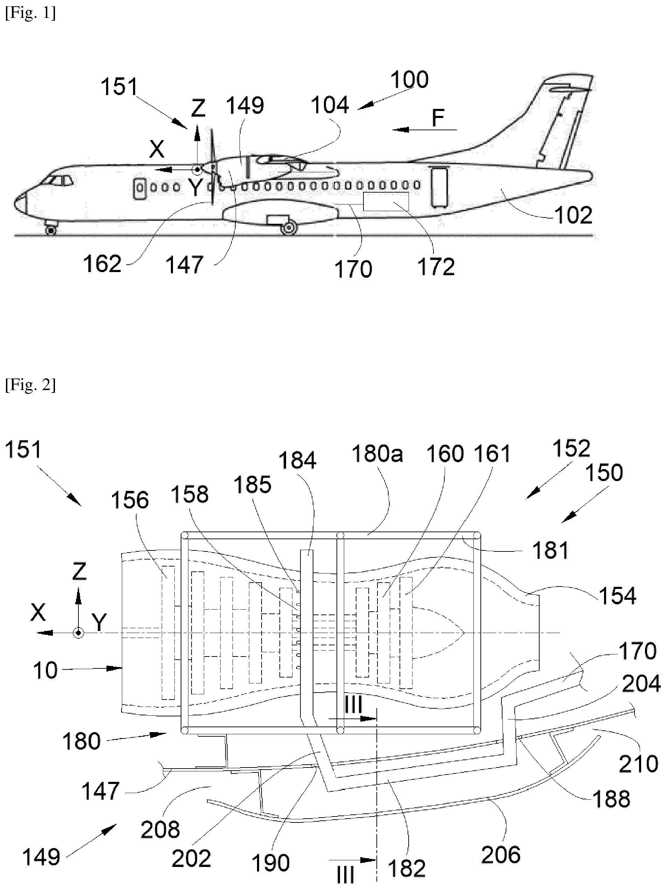

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X l'axe longitudinal du système de motorisation qui est parallèle à l'axe longitudinal de l'aéronef orienté positivement vers l'avant dans le sens d'avancement de l'aéronef, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La Fig. 1 montre un aéronef 100 qui présente un fuselage 102 de part et d'autre duquel est fixée une aile 104. Sous chaque aile 104 est fixée au moins un ensemble propulsif 151 selon l'invention qui comporte une nacelle 149 constituée de capots 147 formant une surface extérieure aérodynamique.

La Fig. 2 montre l'ensemble propulsif 151 qui comporte également un système de motorisation 150 qui est représenté de manière schématique. L'ensemble propulsif 151 comporte un châssis 180 qui assure la fixation de l'ensemble propulsif 151 à une structure de l'aile 104 et constitue un mât d'accrochage. Le châssis 180 prend la forme d'une cage 180a constituée de barres 181 fixées les unes aux autres de manière à former un treillis dans lequel est logé, au moins en partie, le système de motorisation 150. Le châssis 180 est fixé à la structure de l'aile par des moyens de fixation connus de l'homme du métier. Le châssis 180 et le système de motorisation 150 sont logés à l'intérieur de la nacelle 149.

Dans le mode de réalisation de l'invention présenté à la Fig. 2, le système de motorisation 150 est un turbopropulseur qui comporte un noyau 152 qui est enfermé dans un carter 154. Dans le mode de réalisation de l'invention présenté à la Fig. 2, le carter 154 est logé à l'intérieur du châssis 180 formant la cage 180a et il y est fixé par tous moyens appropriés connus de l'homme du métier.

De l'air extérieur pénètre dans la nacelle 149 à travers une ouverture prévue dans les capots 147 à l'avant de la nacelle 149 qui est par ailleurs fixée au châssis 180 par des moyens de fixation appropriés et connus de l'homme du métier.

À l'intérieur de la nacelle 149, le flux d'air primaire 10 pénètre dans le noyau 152 pour alimenter une chambre de combustion 158 en dioxygène.

Le carter 154 est ainsi ouvert à l'avant pour permettre l'introduction du flux primaire 10 dans le noyau 152 et ouvert à l'arrière pour permettre l'échappement des gaz issus de la combustion à travers une tuyère. Le noyau 152 comporte de l'amont vers l'aval, un compresseur 156, la chambre de combustion 158 et une turbine 160. Le compresseur 156 et la turbine 160 sont munis d'aubes 161 rotatives autour de l'axe longitudinal X.

Le flux primaire 10 passe ainsi successivement à travers le compresseur 156 où il est comprimé avant d'être injecté dans la chambre de combustion 158 où il est mélangé au carburant. Les gaz issus de la combustion passent ensuite à travers la turbine 160 et l'entraînent en rotation. La turbine 160 entraîne alors à son tour le compresseur 156 en rotation et les gaz sont ensuite éjectés à l'arrière.

Dans le cas d'un turbopropulseur, le système de motorisation 150 comporte une hélice 162 qui est à l'avant et entraînée en rotation par la turbine 160, éventuellement à travers une boîte de vitesse. L'hélice 162 tourne autour d'un axe de rotation parallèle à l'axe longitudinal X et éventuellement décalé par rapport à celui-ci.

Plus particulièrement, dans le cadre de l'invention, au moins la partie du carter 154 contenant la turbine 160 est logée dans la cage 180a.

L'ensemble propulsif 151 comporte également une canalisation d'alimentation 170 fluidiquement connectée à un réservoir de dihydrogène 172 de l'aéronef 100 pour acheminer le dihydrogène. La canalisation d'alimentation 170 serpente ainsi à l'intérieur de la nacelle 149, depuis l'arrière de la nacelle 149 à l'extérieur du carter 154 jusqu'à l'arrière de la turbine 160.

L'ensemble propulsif 151 comporte également une rampe d'injecteurs 184 logée dans la nacelle 149 et qui est arrangée ici autour du carter 154 et de la chambre de combustion 158. La rampe d'injecteurs 184 est équipée d'injecteurs 185 qui plongent dans la chambre de combustion 158 à l'avant de la turbine 160, ici à travers le carter 154.

L'ensemble propulsif 151 comporte au moins une canalisation de dérivation 182 qui est fluidiquement connectée entre la canalisation d'alimentation 170 et la rampe d'injecteurs 184. Dans le reste de la description, il est fait référence à une canalisation de dérivation 182, mais l'invention s'applique de la même manière pour chaque canalisation de dérivation 182 lorsqu'il y en a plusieurs.

La canalisation de dérivation 182 s'étend le long de la turbine 160 entre l'arrière de la turbine 160 et l'avant de la turbine 160.

Ainsi, le dihydrogène arrive par la canalisation d'alimentation 170, puis à travers la canalisation de dérivation 182 le long de la turbine 160 avant de rejoindre la rampe d'injecteurs 184 où il est injecté dans la chambre de combustion 158 par les injecteurs 185. En cas d'incident sur le système de motorisation 150, il peut arriver que tout ou partie d'une aube 161 de la turbine 160 se détache et traverse le carter 154 au risque de couper la canalisation de dérivation 182 qui passe près de la turbine 160.

La canalisation de dérivation 182 est disposée à l'extérieur des capots 147 de la nacelle 149. La canalisation d'alimentation 170 qui est logée à l'intérieur des capots 147 présente alors un décrochement radial 204 qui traverse un des capots 147 pour rejoindre l'extérieur de la nacelle 149 et la rampe d'injecteurs 184 présente également un décrochement radial 202 qui traverse un des capots 147 pour rejoindre l'extérieur de la nacelle 149. La canalisation de dérivation 182 est alors fluidiquement connectée entre les deux décrochements radiaux 202 et 204 à l'extérieur de la nacelle 149. À cette fin, pour chaque décrochement radial 202, 204, un trou 188, 190 est prévu dans un des capots 147 pour faire passer ledit décrochement radial 202, 204. Chaque décrochement radial 202, 204 est globalement perpendiculaire à l'axe longitudinal X. Selon un mode de réalisation particulier, la canalisation de dérivation 182 est disposée en partie haute de la nacelle 149, c'est-à-dire à 12 heures par rapport à l'axe longitudinal X.

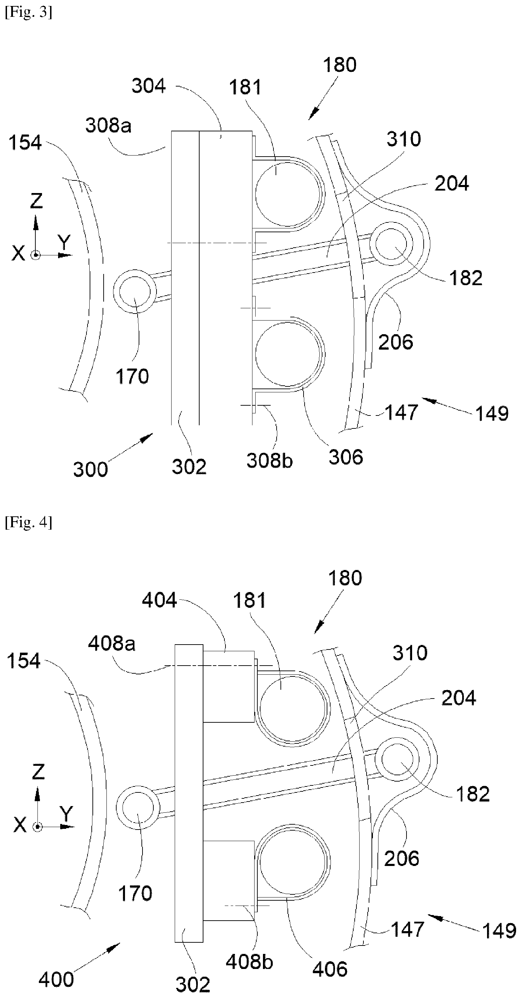

Les Figs. 3 et 4 montrent des coupes pour différents modes de réalisation de l'invention.

Les Figs. 3 et 4 montrent différents moyens de protection 300, 400 qui sont disposés entre le carter 154 et la canalisation de dérivation 182 et entre la turbine 160 et la canalisation de dérivation 182. Les moyens de protection 300, 400 forment une barrière entre la turbine 160 et la canalisation de dérivation 182 pour arrêter un éventuel débris d'une aube 161 qui aurait traversé le carter 154.

Les moyens de protection 300, 400 comportent une plaque de protection 302 qui est rigide et qui s'étend entre le carter 154 et la canalisation de dérivation 182 et entre la turbine 160 et la canalisation de dérivation 182.

La plaque de protection 302 est disposée à l'intérieur de la cage 180a par rapport aux barres 181.

Les moyens de protection 300, 400 comportent également au moins un moyen de fixation 306, 406 qui assure la fixation de la plaque de protection 302 à une barre 181.

Pour chaque moyen de fixation 306, 406, les moyens de protection 300, 400 comportent également un moyen d'absorption 304, 404 qui est disposé entre la plaque de protection 302 et la barre 181 associée au moyen de fixation 306, 406. Chaque moyen d'absorption 304, 404 est également disposé à l'intérieur de la cage 180a par rapport aux barres 181.

Chaque moyen d'absorption 304, 404 est prévu pour se comprimer lorsqu'une force de pression s'exerce contre lui selon une direction globalement radiale par rapport à l'axe longitudinal X.

Chaque moyen d'absorption 304, 404 est fixé sur les barres 181 également par les moyens de fixation 306, 406.

Lorsqu'un débris arrive de la turbine 160, il heurte la plaque de protection 302 qui se déforme sous l'impact pour absorber en partie l'énergie cinétique du débris. Chaque moyen d'absorption 304, 404 peut ensuite se comprimer pour absorber encore plus d'énergie cinétique du débris pour l'arrêter avant qu'il n'atteigne la canalisation de dérivation 182.

En outre, la position de la plaque de protection 302 et de chaque moyen d'absorption 304, 404 à l'intérieur des barres 181 permet que, lorsqu'un débris arrive de la turbine 160, la plaque de protection 302 et chaque moyen d'absorption 304, 404 restent plaqués contre les barres 181 évitant ainsi le risque qu'ils soient arrachés.

Ainsi, contrairement à l'état de la technique, la canalisation de dérivation 182 est protégée des éventuels débris venant d'une aube 161.

Dans le mode de réalisation de l'invention présenté à la Fig. 3, il y a un seul moyen d'absorption 304 qui est pris en sandwich entre la plaque de protection 302 et les barres 181 sur lesquelles sont fixés la plaque de protection 302 et le moyen d'absorption 304.

Il y a ainsi un moyen d'absorption 304 unique qui prend ici la forme d'une plaque disposée entre la plaque de protection 302 et les barres 181.

Chaque moyen de fixation 306 prend ici la forme d'un collier qui se place autour de la barre 181 et qui est fixé au moyen d'absorption 304 et à la plaque de protection 302 par des moyens de solidarisation tels que des vis 308a-b.

En partie haute de la Fig. 3, chaque vis 308a est vissée à travers le moyen d'absorption 304 et la plaque de protection 302 pour assurer leur fixation.

En partie basse de la Fig. 3, chaque vis 308b est vissée à travers uniquement le moyen d'absorption 304 et la plaque de protection 302 est fixée au moyen d'absorption 304 par tout autre moyen tel que de la colle, des rivets, etc.

Chaque moyen de fixation 306 peut ainsi fixer la plaque de protection 302 soit directement, soit indirectement.

Dans le mode de réalisation de l'invention présenté à la Fig. 4, il y a un moyen d'absorption 404 distinct par moyen de fixation 406 et chaque moyen d'absorption 404 est pris en sandwich entre la plaque de protection 302 et la barre 181 correspondant au moyen de fixation 406.

Chaque moyen de fixation 406 prend ici la forme d'un collier qui se place autour de la barre 181 et qui est fixé au moyen d'absorption 404 et à la plaque de protection 302 par des moyens de solidarisation tels que des vis 408a-b.

Comme pour la Fig. 3, chaque moyen de fixation 406 peut fixer la plaque de protection 302 soit directement, soit indirectement. En partie haute de la Fig. 4, chaque vis 408a est vissée à travers le moyen d'absorption 404 et la plaque de protection 302 pour assurer la fixation et, en partie basse de la Fig. 4, chaque vis 408b est vissée à travers uniquement le moyen d'absorption 404 et la plaque de protection 302 est fixée au moyen d'absorption 404 par tout autre moyen tel que de la colle, des rivets, etc.

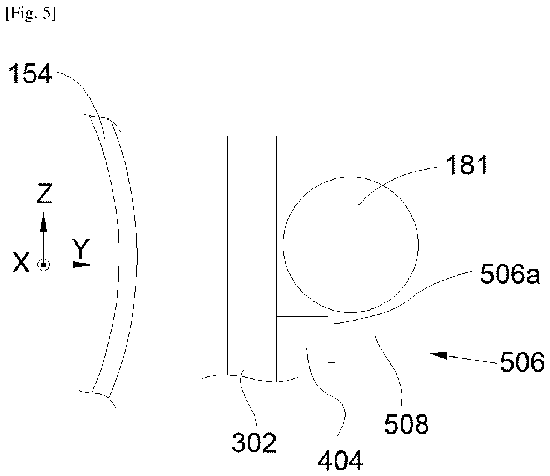

La Fig. 5 montre un mode de réalisation alternatif des moyens de fixation 506 qui prennent ici la forme d'une languette 506a solidaire de la barre 181 et à laquelle le moyen d'absorption 404 est fixé par des moyens de solidarisation tels qu'une vis 508 à travers un alésage de la languette 506a.

La plaque de protection 302 est réalisée par exemple en un alliage de nickel, en inox, en un alliage de titane, etc, avec une résistance spécifique élevée comme l'alliage connu sous l'appellation Ti-6Al-4V et présente par exemple une épaisseur de l'ordre de 30 mm.

La plaque de protection 302 est par exemple un empilement d'une ou plusieurs plaques métalliques (titane, acier, aluminium, ...), ou composites (carbone, kevlar, ...) qui permettent du fait de densités différentes, d'avoir des amortissements différents lors de l'impact.

Le moyen d'absorption 304, 404 est constitué de manière à présenter une résistance à la compression variable entre la plaque de protection 302 et la barre 181 avec une résistance moins élevée du côté de la plaque de protection 302 et une résistance plus élevée du côté de la barre 181 pour absorber progressivement l'énergie cinétique du débris.

Il est également possible de prévoir que la résistance à la compression variable du moyen d'absorption 304, 404 soit inversée et que la résistance la plus élevée soit du côté de la plaque de protection 302 et que la résistance la moins élevée soit du côté de la barre 181.

Le moyen d'absorption 304, 404 prend par exemple la forme d'une structure en nid d'abeilles. Dans le mode de réalisation présenté sur les Figs. 2 à 4, pour améliorer l'aérodynamisme de l'ensemble propulsif 151, celui-ci comporte un capot extérieur 206 fixé sur l'extérieur des capots 147 de la nacelle 149 en englobant la canalisation de dérivation 182. L'ensemble propulsif 151 présente alors une entrée d'air 208 à l'avant du capot extérieur 206, entre ce dernier et les capots 147 de la nacelle 149 et une sortie 210 à l'arrière du capot extérieur 206, entre ce dernier et les capots 147 de la nacelle 149. Ainsi, l'air extérieur qui pénètre par l'entrée d'air 208 va entraîner l'éventuel dihydrogène vers la sortie d'air 210 en cas de fuite. Dans les modes de réalisation des Figs. 3 et 4, le capot 147 de la nacelle 149 qui est disposé le long de la canalisation de dérivation 182 est remplacé par un moyen d'absorption complémentaire 310 qui est fixé au châssis 180 ou aux capots 147 voisins.

Le moyen d'absorption complémentaire 310 prend par exemple la même forme que les moyens d'absorption 304 et 404 en présentant une résistance à la compression moins élevée du côté de l'intérieur de la nacelle 149 et une résistance à la compression plus élevée du côté de l'extérieur de la nacelle 149. Comme précédemment, une répartition inverse est possible avec une résistance à la compression plus élevée du côté de l'intérieur de la nacelle 149 et une résistance à la compression moins élevée du côté de l'extérieur de la nacelle 149.

Le moyen d'absorption complémentaire 310 peut être une structure en nid d'abeilles avec éventuellement une densité variable dans l'épaisseur.

Pour réaliser une résistance variable à la compression variable, le moyen d'absorption 304, 404 et le moyen d'absorption complémentaire 310 peuvent prendre d'autres formes.

Selon un mode de réalisation particulier, le moyen d'absorption 304, 404, 310 est constitué d'un panneau sandwich comportant un empilement avec, successivement, une peau interne, une structure en nid d'abeilles et une peau externe, où la structure en nid d'abeilles peut présenter une densité variable dans l'épaisseur et où les peaux sont des plaques métalliques (titane, acier, aluminium, ...) avec des épaisseurs égales ou différentes. Selon un exemple de réalisation, la peau interne est plus épaisse que la peau externe mais l'inverse est également envisageable. Selon un autre exemple, les épaisseurs des peaux interne et externe peuvent être égales.

Selon un autre mode de réalisation particulier, le moyen d'absorption 304, 404, 310 est constitué d'un panneau sandwich comportant un empilement avec, successivement, une peau interne, une structure en nid d'abeilles, une peau intermédiaire, une structure en nid d'abeilles, et une peau externe, où les structures en nid d'abeilles peuvent présenter des densités et des épaisseurs différentes, et où les peaux sont des plaques métalliques avec des épaisseurs égales ou différentes.

La plaque de protection 302 peut être une plaque réalisée par impression 3D pour créer une structure particulièrement adaptée à l'absorption des chocs. La plaque de protection 302 peut être constituée d'un empilement d'une peau interne, d'une structure interne et d'une peau externe, où les peaux sont des tôles d'épaisseurs et de matériaux identiques ou différents, et où la structure interne est une structure pyramidale de forme adaptée.

## Revendications

1. Ensemble propulsif (151) pour un aéronef (100) comportant :
- un châssis (180) prenant la forme d'une cage (180a) constituée d'un treillis de barres (181),
- une nacelle (149) fixée au châssis (180) et constituée de capots (147),
- un système de motorisation (150) logé dans la nacelle (149) et comportant un noyau (152) enfermé dans un carter (154) et présentant une chambre de combustion (158) et une turbine (160) munie d'aubes (161) rotatives autour d'un axe longitudinal (X), la partie du carter (154) contenant la turbine (160) étant logée dans la cage (180a), l'ensemble propulsif étant **caractérisé en ce qu'**il comporte une canalisation d'alimentation (170) destinée à acheminer du dihydrogène, serpentant à l'intérieur de la nacelle (149) jusqu'à l'arrière de la turbine (160), et présentant un décrochement radial (204) qui traverse un des capots (147) pour rejoindre l'extérieur de la nacelle (149),
- une rampe d'injecteurs (184) logée dans la nacelle (149), équipée d'injecteurs (185) qui plongent dans la chambre de combustion (158) à l'avant de la turbine (160), et présentant un décrochement radial (202) qui traverse un des capots (147) pour rejoindre l'extérieur de la nacelle (149),
- une canalisation de dérivation (182) fluidiquement connectée entre les deux décrochements radiaux (202, 204) et disposée à l'extérieur de la nacelle (149), et
- des moyens de protection (300, 400) comportant :
- une plaque de protection (302) disposée à l'intérieur de la cage (180a) par rapport aux barres (181) et s'étendant entre la turbine (160) et la canalisation de dérivation (182),
- au moins un moyen de fixation (306, 406) prévu pour fixer la plaque de protection (302) à une barre (181), et
- pour chaque moyen de fixation (306, 406), un moyen d'absorption (304, 404) disposé entre la plaque de protection (302) et la barre (181) associée.

2. Ensemble propulsif (151) selon la revendication 1, **caractérisé en ce qu'**il y a un moyen d'absorption (304) unique qui prend la forme d'une plaque entre la plaque de protection (302) et les barres (181).

3. Ensemble propulsif (151) selon la revendication 1, **caractérisé en ce qu'**il y a un moyen d'absorption (404) distinct par moyen de fixation (406) et **en ce que** chaque moyen d'absorption (404) est pris en sandwich entre la plaque de protection (302) et la barre (181) correspondant au moyen de fixation (406).

4. Ensemble propulsif (151) selon l'une des revendications 1 à 3, **caractérisé en ce que** le ou chaque moyen d'absorption (304, 404) présente une résistance à la compression moins élevée du côté de la plaque de protection (302) et une résistance à la compression plus élevée du côté de la barre (181).

5. Ensemble propulsif (151) selon l'une des revendications 1 à 4, **caractérisé en ce que** le capot (147) de la nacelle (149) disposé le long de la canalisation de dérivation (182) est remplacé par un moyen d'absorption complémentaire (310) qui est fixé au châssis (180) ou aux capots (147) voisins.

6. Ensemble propulsif (151) selon la revendication 5, **caractérisé en ce que** le moyen d'absorption complémentaire (310) présente une résistance à la compression moins élevée du côté de l'intérieur de la nacelle (149) et une résistance à la compression plus élevée du côté de l'extérieur de la nacelle (149).

7. Ensemble propulsif (151) selon l'une des revendications 1 à 6, **caractérisé en ce qu'**il comporte un capot extérieur (206) fixé sur l'extérieur des capots (147) de la nacelle (149) en englobant la canalisation de dérivation (182), et **en ce que** l'ensemble propulsif (151) présente une entrée d'air (208) à l'avant du capot extérieur (206), entre ce dernier et les capots (147) de la nacelle (149) et une sortie (210) à l'arrière du capot extérieur (206), entre ce dernier et les capots (147) de la nacelle (149).

8. Aéronef (100) comportant une aile (104), un réservoir de dihydrogène (172) et au moins un ensemble propulsif (151) selon l'une des revendications précédentes, où l'ensemble propulsif (151) est fixé sous l'aile (104) et où la canalisation d'alimentation (170) est fluidiquement connectée au réservoir de dihydrogène (172).

## Patentansprüche

1. Antriebseinheit (151) für ein Luftfahrzeug (100), umfassend:
- einen Rahmen (180), der die Form eines Käfigs (180a) aufweist, der aus einem Gitterwerk aus Stäben (181) besteht,
- eine Gondel (149), die an dem Rahmen (180) befestigt ist und aus Verkleidungen (147) besteht,
- ein Motorisierungssystem (150), das in der Gondel (149) aufgenommen ist und einen Kern (152) umfasst, der in einem Gehäuse (154) eingeschlossen ist und eine Brennkammer (158) und eine Turbine (160), die über um eine Längsachse (X) drehende Schaufeln (161) verfügt, aufweist, wobei sich der Teil des Gehäuses (154), der die Turbine (160) enthält, in dem Käfig (180a) befindet, wobei die Antriebseinheit **dadurch gekennzeichnet ist, dass** sie eine Versorgungsleitung (170) umfasst, die dazu bestimmt ist, Diwasserstoff zu leiten, sich im Inneren der Gondel (149) bis zur Rückseite der Turbine (160) schlängelt und einen radialen Absatz (204) aufweist, der eine der Verkleidungen (147) durchquert, um die Außenseite der Gondel (149) zu erreichen,
- ein Einspritzdüsenverteilerrohr (184), das sich in der Gondel (149) befindet, mit Einspritzdüsen (185) ausgerüstet ist, die auf der Vorderseite der Turbine (160) in die Brennkammer (158) eintreten, und einen radialen Absatz (202) aufweist, der eine der Verkleidungen (147) durchquert, um die Außenseite der Gondel (149) zu erreichen,
- eine Abzweigleitung (182), die zwischen den zwei radialen Absätzen (202, 204) fluidisch verbunden ist und auf der Außenseite der Gondel (149) angeordnet ist, und
- Schutzmittel (300, 400), die Folgendes umfassen:
- eine Schutzplatte (302), die in Bezug auf die Stäbe (181) innerhalb des Käfigs (180a) angeordnet ist und sich zwischen der Turbine (160) und der Abzweigleitung (182) erstreckt,
- mindestens ein Befestigungsmittel (306, 406), das dazu vorgesehen ist, die Schutzplatte (302) an einem Stab (181) zu befestigen, und
- für jedes Befestigungsmittel (306, 406), ein Absorptionsmittel (304, 404), das zwischen der Schutzplatte (302) und dem assoziierten Stab (181) angeordnet ist.

2. Antriebseinheit (151) nach Anspruch 1, **dadurch gekennzeichnet, dass** es ein einziges Absorptionsmittel (304) gibt, das die Form einer Platte zwischen der Schutzplatte (302) und den Stäben (181) aufweist.

3. Antriebseinheit (151) nach Anspruch 1, **dadurch gekennzeichnet, dass** es pro Befestigungsmittel (406) ein separates Absorptionsmittel (404) gibt und dass jedes Absorptionsmittel (404) zwischen der Schutzplatte (302) und dem Stab (181), der dem Befestigungsmittel (406) entspricht, eingeklemmt ist.

4. Antriebseinheit (151) nach einem der Ansprüche 1 bis 3, **dadurch gekennzeichnet, dass** das oder jedes Absorptionsmittel (304, 404) auf der Seite der Schutzplatte (302) eine geringere Druckfestigkeit und auf der Seite des Stabs (181) eine höhere Druckfestigkeit aufweist.

5. Antriebseinheit (151) nach einem der Ansprüche 1 bis 4, **dadurch gekennzeichnet, dass** die Verkleidung (147) der Gondel (149), die entlang der Abzweigleitung (182) angeordnet ist, durch ein komplementäres Absorptionsmittel (310) ersetzt wird, das an dem Rahmen (180) oder an den benachbarten Verkleidungen (147) befestigt ist.

6. Antriebseinheit (151) nach Anspruch 5, **dadurch gekennzeichnet, dass** das komplementäre Absorptionsmittel (310) auf der Innenseite der Gondel (149) eine geringere Druckfestigkeit und auf der Außenseite der Gondel (149) eine höhere Druckfestigkeit aufweist.

7. Antriebseinheit (151) nach einem der Ansprüche 1 bis 6, **dadurch gekennzeichnet, dass** sie eine äußere Verkleidung (206) umfasst, die an der Außenseite der Verkleidungen (147) der Gondel (149) befestigt ist, wobei sie die Abzweigleitung (182) umschließt, und dass die Antriebseinheit (151) einen Lufteinlass (208) an der Vorderseite der äußeren Verkleidung (206), zwischen dieser letzteren und den Verkleidungen (147) der Gondel (149), und einen Auslass (210) an der Rückseite der äußeren Verkleidung (206), zwischen dieser letzteren und den Verkleidungen (147) der Gondel (149), aufweist.

8. Luftfahrzeug (100), das eine Tragfläche (104), einen Diwasserstofftank (172) und mindestens eine Antriebseinheit (151) nach einem der vorhergehenden Ansprüche umfasst, wobei die Antriebseinheit (151) unter der Tragfläche (104) befestigt ist und wobei die Versorgungsleitung (170) mit dem Diwasserstofftank (172) fluidisch verbunden ist.

## Claims

1. Propulsion assembly (151) for an aircraft (100), having:
- a chassis (180) in the form of a cage (180a) formed by a grid of bars (181),
- a nacelle (149) fastened to the chassis (180) and formed by cowls (147),
- a propulsion system (150) seated in the nacelle (149) and including a core (152) enclosed in a casing (154) and having a combustion chamber (158) and a turbine (160) provided with blades (161) that are rotary about a longitudinal axis (X), the portion of the casing (154) containing the turbine (160) being seated in the cage (180a),
the propulsion assembly (151) being **characterized in that** it has a supply pipe (170) intended to convey the dihydrogen, winding inside the nacelle (149) as far as the rear of the turbine (160), and having a radial step (204) that passes through one of the cowls (147) to reach the outside of the nacelle (149),
- an injector rail (184) seated in the nacelle (149), fitted with injectors (185) that enter the combustion chamber (158) at the front of the turbine (160), and having a radial step (202) that passes through one of the cowls (147) to reach the outside of the nacelle (149),
- a bypass pipe (182) fluidically connected between the two radial steps (202, 204) and arranged outside the nacelle (149), and
- protection means (300, 400) comprising:
- a protection plate (302) arranged inside the cage (180a) in relation to the bars (181) and extending between the turbine (160) and the bypass pipe (182),
- at least one fastening means (306, 406) provided to fasten the protection plate (302) to a bar (181), and
- for each fastening means (306, 406), an absorption means (304, 404) arranged between the protection plate (302) and the related bar (181).

2. Propulsion assembly (151) according to Claim 1, **characterized in that** there is a single absorption means (304) in the form of a plate between the protection plate (302) and the bars (181).

3. Propulsion assembly (151) according to Claim 1, **characterized in that** there is a separate absorption means (404) for each fastening means (406) and **in that** each absorption means (404) is sandwiched between the protection plate (302) and the bar (181) corresponding to the fastening means (406).

4. Propulsion assembly (151) according to one of the Claims 1 to 3, **characterized in that** the or each absorption means (304, 404) has a lower compression strength on the side facing the protection plate (302) and a higher compression strength on the side facing the bar (181).

5. Propulsion assembly (151) according to one of the Claims 1 to 4, **characterized in that** the cowl (147) of the nacelle (149) arranged alongside the bypass pipe (182) is replaced by an additional absorption means (310) that is fastened to the chassis (180) or to the neighbouring cowls (147).

6. Propulsion assembly (151) according to Claim 5, **characterized in that** the additional absorption means (310) has a lower compression strength on the side facing the inside of the nacelle (149) and a higher compression strength on the side facing the outside of the nacelle (149).

7. Propulsion assembly (151) according to one of the Claims 1 to 6, **characterized in that** it comprises an outer cowl (206) fastened to the outside of the cowls (147) of the nacelle (149) covering the bypass pipe (182), and **in that** the propulsion assembly (151) has an air inlet (208) at the front of the outer cowl (206), between the latter and the cowls (147) of the nacelle (149) and an outlet (210) at the rear of the outer cowl (206), between the latter and the cowls (147) of the nacelle (149).

8. Aircraft (100) having a wing (104), a dihydrogen tank (172), and at least one propulsion assembly (151) according to one of the preceding Claims, in which the propulsion assembly (151) is fastened beneath the wing (104) and in which the supply pipe (170) is fluidically connected to the dihydrogen tank (172).
